# EUROPEAN PATENT APPLICATION

(11) **EP 4 628 825 A1**
(43) Date of publication of application: **08.10.2025**
(21) Application number: 23897980.1
(22) Date of filing: 24.07.2023
(51) Int. Cl.: F27D 11/10, C21B 13/00, C21B 13/12, F27D 99/00

(54) **ELECTRIC ARC FURNACE EQUIPMENT AND ELECTRIC ARC FURNACE OPERATION METHOD**

(30) Priority: 29.11.2022 KR 20220162725
(71) Applicant: POSCO Co., Ltd, Pohang-si, Gyeongsangbuk-do 37859 (KR)
(72) Inventor: JEOUNG, Ho Hyun, Pohang-si, Gyeongsangbuk-do 37859 (KR); PAEK, Chan Joon, Seongnam-si, Gyeonggi-do 13617 (KR); LEE, Baek, Seoul 06968 (KR); SHIN, Jong Hun, Gwangju 61686 (KR); KO, Myoung Kuk, Suncheon-si, Jeollanam-do 58006 (KR); KIM, Do Eung, Pohang-si, Gyeongsangbuk-do 37669 (KR); SONG, Chung Jin, Pohang-si, Gyeongsangbuk-do 37859 (KR); KIM, Jin Young, Pohang-si, Gyeongsangbuk-do 37859 (KR); HONG, Seong Hun, Incheon 21665 (KR)
(74) Representative: Meissner Bolte Partnerschaft mbB
(86) International application number: PCT/KR2023/010629
(87) International publication number: WO 2024/117444

(57) **Abstract**

The present invention relates to electric furnace equipment and an electric furnace operation method, and more particularly, to electric furnace equipment and an electric furnace operation method for dissolving a raw material using an electrode part capable of self-baking.

An electric furnace equipment according to an embodiment of the present invention comprises a main body part having a processing space for processing a raw material, an electrode part installed in the main body part and having an internal space into which an electrode material for self-baking is introduced, and a detection unit for detecting a height of the electrode material filled in the electrode part.

## Description

### TECHNICAL FIELD

The present invention relates to electric furnace equipment and an electric furnace operation method, and more particularly, to electric furnace equipment and an electric furnace operation method for dissolving a raw material using an electrode part capable of self-baking.

### BACKGROUND ART

Recently, carbon neutral technology that minimizes an amount of carbon dioxide generation are being actively developed to cope with the climate change crisis. Accordingly, the steel industry is researching and developing a hydrogen reduction steelmaking process technology that produces direct reduced iron using hydrogen instead of a fossil fuel that generates carbon dioxide, and uses the direct reduced iron to produce iron. When the hydrogen reduction steelmaking process technology is commercialized, it is possible to replace not only blast furnace operations, which generate large amounts of carbon dioxide, but also converter operations by utilizing electric furnace operations.

Electric furnace equipment supplies power to an electrode rod and melts a raw material using heat and arc generated from the electrode rod. A pre-baked electrode may be used as the electrode rod, but in electric furnace equipment for melting direct reduced iron in large quantities, a self-baking electrode rod, which is used as an electrode by baking the electrode material equal to the amount of electrode consumed, is used.

In the electric furnace using the self-baking electrode rod, a level, that is, a height, of the electrode material filled in the electrode rod is a major factor that affects baking quality of the electrode. When the height of the electrode material filled in the electrode rod is increased, the internal pressure thereof may be increased to cause detachment of the electrode, and when the height of the electrode material is reduced, the electrode baked due to the lack of the electrode material may have an internal defect. Accordingly, the height of the electrode material filled in the electrode rod needs to be continuously measured. Conventionally, the height of the electrode material filled in the electrode rod was measured by an operator directly climbing to the top of the electrode rod using a tape measure. However, such a measurement method has a problem in that safety accidents such as electric shock and fall are high, and when necessary, power supplied to the facility should be cut off, and thus the operation rate of the electric furnace equipment is deteriorated.

### (Prior art literature)

Korean Laid-Open Patent Publication No. 10-2017-0006005

### DISCLOSURE OF THE INVENTION

### TECHNICAL PROBLEM

The present invention provides electric furnace equipment and an electric furnace operation method capable of automatically monitoring a height of an electrode material filled in an electrode part for self-baking.

### TECHNICAL SOLUTION

An electric furnace equipment according to an embodiment of the present invention includes a main body part having a processing space for processing a raw material, an electrode part installed in the main body part and having an internal space into which an electrode material for self-baking is introduced, and a detection unit for detecting a height of the electrode material filled in the electrode part.

The detection unit may include a distance measurer measuring a distance to the electrode material filled in the electrode part and a converter converting the measured distance into a height of the electrode material.

The detection unit may include a driver moving the distance measurer in a direction crossing an extension direction of the electrode part.

The electrode part may be installed in the main body part so that a plurality of electrode parts are arranged to be spaced apart from each other, and the driver may move the distance measurer along an arrangement direction of the plurality of electrode parts.

The driver may include a crane installed outside the main body so as to introduce the electrode material into the electrode part.

The detection unit may include a vibration measurer installed in the electrode part so as to measure a vibration amount of the electrode part.

A power supplier heating the electrode material by supplying power to the electrode part may be installed on a side surface of the electrode part, and the vibration measurer may be installed to be spaced apart above the power supply unit.

The plurality of vibration measurers may be arranged to be spaced apart from each other in the extension direction of the electrode part, and the detection unit may include a comparator calculating the height of the electrode material by comparing a vibration amount measured by the plurality of vibration measurers.

According to another aspect of the present invention, there is provided an electric furnace operation method including a process of introducing a raw material into an electric furnace, a process of dissolving the raw material by supplying power to an electrode part of the electric furnace, a process of introducing an electrode material for self-baking into the electrode part, and a process of detecting a height of the electrode material filled in the electrode part.

The process of detecting the height of the electrode material may include a process of measuring a distance to the electrode material filled in the electrode part at a reference position above the electrode part having a set height, and a process of subtracting the measured distance from a height of the reference position to convert the distance into the height of the electrode material.

In the process of measuring the distance to the electrode material, a distance to the electrode material may be measured at a plurality of positions arranged in a direction crossing an extension direction of the electrode part.

The process of measuring the distance to the electrode material may be performed while moving a distance measurer so as to pass through the plurality of positions.

The process of detecting the height of the electrode material may include a process of measuring a vibration amount of the electrode part at different heights, and a process of calculating a height between a minimum height at which a vibration amount exceeding a reference vibration amount is measured and a maximum height at which a vibration amount less than the reference vibration amount is measured as the height of the electrode material.

In the process of detecting the height of the electrode material, the height of the electrode material may be detected by using a database in which a vibration amount measured in advance for each height of the electrode material is stored.

The electric furnace operation method may further include a process of reintroducing the electrode material according to the detected height of the electrode material.

In the process of introducing the electrode material, a briquette type electrode material may be introduced into the electrode part, and in the process of reintroducing the electrode material, the electrode material may be reintroduced when the detected height of the electrode material is measured to be less than a reference height.

The process of detecting the height of the electrode material may include a process of determining the height of the electrode material by comparing a first height of the electrode material converted from a distance to the electrode material and a second height of the electrode material calculated from the vibration amount of the electrode part.

In the process of determining the height of the electrode material, the first height may be determined as the height of the electrode material when a difference between the first height and the second height is within an error range, and the second height may be determined as the height of the electrode material when the difference between the first height and the second height is outside the error range.

In the process of introducing the electrode material, a cylinder-type electrode material may be introduced into a center portion of the electrode part, and in the process of reintroducing the electrode material, when a difference between the height of the electrode material stacked at a center portion of the electrode part and the height of the electrode material present in a liquid state at an edge of the electrode part is measured to be less than a reference height difference.

The raw material may include direct reduced iron reduced by hydrogen.

### ADVANTAGEOUS EFFECTS

According to the embodiment of the present invention, the height of the electrode material filled in the electrode part can be automatically detected without intervention of the operator, thereby preventing safety accidents and increasing an operation rate of the electric furnace equipment to improve productivity.

In addition, the amount of the electrode material filled may be accurately checked to prevent detachment and internal defects of the electrode, and baking quality of the electrode may be increased to improve the operation efficiency.

### BRIEF DESCRIPTION OF THE DRAWINGS

FIG. 1 is a schematic diagram of electric furnace equipment according to an embodiment of the present invention.
FIG. 2 is a diagram illustrating a state in which an electrode material is self-baked according to an embodiment of the present invention.
FIG. 3 is a diagram illustrating a state in which a height of an electrode material is detected according to an embodiment of the present invention.
FIG. 4 is a diagram illustrating a change in a vibration amount when the electrode material is filled and when not filled.
FIG. 5 is a diagram illustrating a state in which the height of an electrode material is detected according to another embodiment of the present invention.
FIG. 6 is a diagram schematically illustrating an electric furnace equipment operation method according to an embodiment of the present invention.
FIG. 7 is a schematic diagram illustrating an electric furnace equipment operation method according to another embodiment of the present invention.

### MODE FOR CARRYING OUT THE INVENTION

Hereinafter, embodiments of the present invention will be described in detail with reference to the accompanying drawings. However, the present invention is not limited to the embodiments disclosed below, but may be implemented in various different forms, and the embodiments of the present invention are only provided to to make the disclosure of the present invention complete and to fully inform those skilled in the art of the scope of the present invention. In order to describe the invention in detail, the drawings may be exaggerated, and like reference numerals refer to like elements in the drawings.

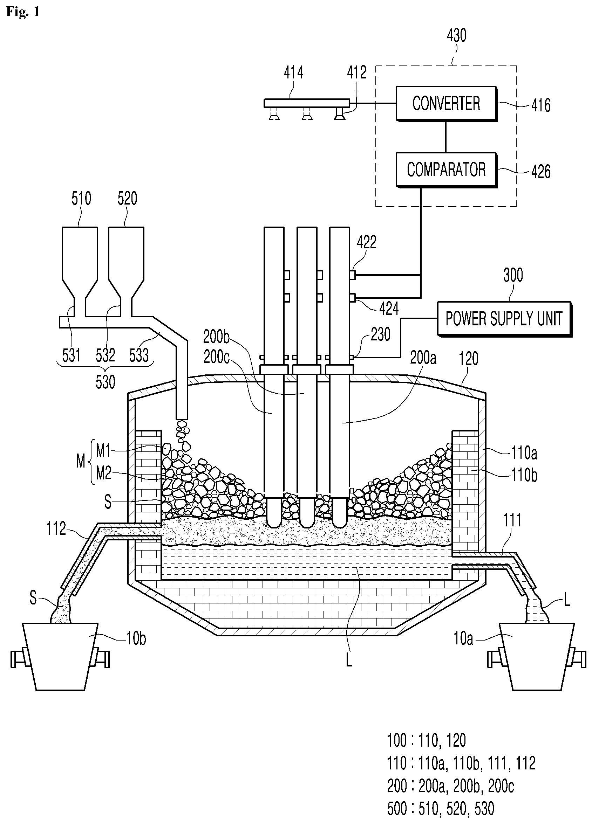

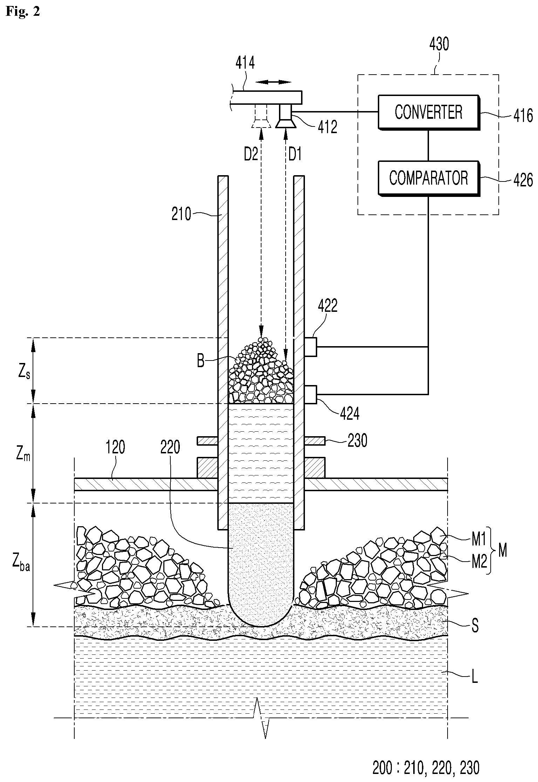

FIG. 1 is a diagram schematically illustrating of an electric furnace according to an embodiment of the present invention, and FIG. 2 is a diagram illustrating a state in which an electrode material is self-baked according to an embodiment of the present invention.

Referring to FIG. 1, electric furnace equipment according to an embodiment of the present invention includes a main body part 100 having a processing space for processing a raw material M, an electrode part 200 installed in the main body part 100 and having an internal space into which an electrode material for self-baking may be introduced, and a detection unit for detecting a height of the electrode material filled in the electrode part 300. In addition, the electric furnace may further include a power supply unit 300 connected to the electrode part 200 so as to supply power to the electrode part 200 and a raw material supply unit 500 installed in the main body part 100 so as to introduce the raw material M into the processing space.

The main body part 100 has a processing space for processing the raw material M. To this end, the main body part 100 may include a furnace body 110 having an opening and a cover 120 covering an opening of the furnace body 110.

The furnace body 110 may have a cylindrical shape with an open upper portion. For example, the furnace body 110 may have a cylindrical shape, and in this case, the main body part 110 may have a cylindrical processing space. Alternatively, the furnace body 110 may have an approximately rectangular cylindrical shape, and in this case, the furnace body 110 may have a rectangular cylindrical-shaped inner space. In addition, the furnace body 110 may also have various cylindrical shapes with an open upper portion. The furnace body 110 may include an outer wall body 110a made of iron or metal, and an inner wall body 110b constructed of a refractory material on the inside of the outer wall body.

The furnace body 110 may be provided with a first outlet 111 capable of discharging a molten material L and a second outlet 112 capable of discharging slag S floating on the upper portion of the molten material L. Each of the first and second outlets 111 and 112 may be provided on a side wall of the furnace body 110 or may be provided on a lower floor of the furnace body 110. For example, as shown in FIG. 1, the first outlet 111 may be provided on one side wall of the furnace body 110, and the second outlet port 112 may be provided on the other side wall of the furnace body 110. Of course, the first and second outlets 111 and 112 are not limited to the above-described positions, but may be provided at various positions capable of discharging the molten material L and the slag S to the outside.

Containers 10a and 10b are arranged outside the furnace body 110 to respectively accommodate the molten material L and the slag S. That is, on the outside of the furnace body 110, the first container 10a may be arranged below the first outlet 111 and the second container 10b may be arranged below the second outlet 112. For example, the first container 10a in which the molten material L discharged from the first outlet 111 is accommodated may be a ladle, and the second container 10b in which the slag S discharged from the second outlet 112 is accommodated may be a slag port.

The cover 120 is installed on an upper portion of the furnace body 110 so as to close the open upper portion of the furnace body 110. The cover 120 may be made of, for example, an iron shell or a metal. In addition, the cover 120 may be provided with a hole through which the electrode part 200 may be installed, and a hole through which a raw material supply unit 500 may be installed.

The raw material supply unit 500 is installed in the main body part 100 so as to introduce the raw material M into the processing space of the main body part 100. Here, the raw material M introduced into the processing space of the main body part 100 from the raw material supply unit 500 may include direct reduced iron (DRI). Here, the direct reduced iron may be at least one of a low-grade direct reduced iron manufactured using ore having an iron (Fe) content of less than 65 wt% before reduction and a high-grade direct reduced iron manufactured using ore having an iron (Fe) content of 65 wt% or more before reduction. In addition, the direct reduced iron may be direct reduced iron directly reduced using hydrogen. Such direct reduced iron may be manufactured by a reduced iron manufacturing equipment that receives a reducing gas including hydrogen gas and iron ore to manufacture reduced iron. In addition, the raw material M is not limited to direct reduced iron, and may include scrap having a higher iron (Fe) content than the direct reduced iron. The scrap may be an iron scrap having an iron (Fe) content greater than 70 wt%, more preferably an iron scrap having an iron (Fe) content of 85 wt% to 99 wt%.

Meanwhile, the raw material M introduced into the processing space of the main body part 100 may contain a first raw material M1 and a second raw material M2. In this case, the first raw material M1 may include, for example, direct reduced iron, the second raw material M2 may include a reducing agent, and as a more specific example, the second raw material M2 may contain coke. In the processing space of the main body part 100, the first raw material M1 and the second raw material M2 are dissolved by heat generated from the electrode part 200, and the first raw material M1 is reduced by the second raw material M2, and thus a molten material L may be produced.

To this end, the raw material supply unit 500 may include a first hopper 510 in which the first raw material M1 is stored, a second hopper 520 in which the second raw material M2 is stored, and a supplier 530 connected to the first and second hoppers 510 and 520 to allow the first and second raw materials M1 and M2 to be introduced into the processing space of the main body part 100.

The supplier 530 may include, for example, a first transfer pipe 531 connected to the first hopper 510, a second transfer pipe 532 connected to the second hopper 520, and a third transfer pipe 533 having one end connected to the first and second transfer pipes 531 and 532 and the other end installed through the cover 120 to be positioned in the inner space of the main body part 100. In addition, a valve may be installed in at least one of the first transfer pipe 531, the second transfer pipe 532, and the third transfer pipe 533.

In the above description, it has been described as an example that the raw material supply unit 500 includes the first and second hoppers 510 and 520. However, the present invention is not limited thereto, and may further include a hopper storing raw materials different from the first and second raw materials M1 and M2. In addition, the raw material M is not limited to being introduced using the raw material supply unit 500 as described above, and may also be directly introduced into the main body part 100 through an inlet provided in the cover 120.

The electrode part 200 is arranged to be partially inserted into the processing space of the main body part 100 so as to generate heat. The electrode part 200 receives power to generate heat and supplies heat to the raw material M charged into the processing space. Here, the power may refer to a voltage or a current, and the heat generated from the electrode part 200 may be a resistance heat or an arc heat. The resistance heat or arc heat generated by the electrode part 200 melts or dissolves the raw material M, thereby producing a molten material L, for example, a molten metal such as molten iron.

The electrode part 200 may include a plurality of electrode rods so as to be spaced apart from each other. For example, the electrode part 200 may include three electrode rods 200a, 200b, and 200c. The three electrode rods 200a, 200b, and 200c may be arranged in a triangular shape so as to surround the center of the main body part 100, and the distance between the electrode rods 200a, 200b, and 200c may be the same. The three electrode rods 200a, 200b, and 200c may be arranged so as to vertically pass through the cover 110 covering the furnace body 120 having a substantially cylindrical shape. Alternatively, the electrode part 200 may include six electrode rods arranged in a line. The six electrode rods may be spaced apart from each other at the same interval so as to vertically pass through the cover 110 covering the furnace body 120 having a substantially rectangular cylindrical shape.

Meanwhile, the electric furnace equipment according to an embodiment of the present invention may include an elevating part (not shown) capable of moving a plurality of electrode rods in the vertical direction. The elevating part may be provided so as to move the plurality of electrode rods in the vertical direction as a whole, or may be provided so as to move each of the electrode rods in the vertical direction. The elevating part may adjust a distance between a lower end of the electrode rod and the raw material M or the slag S in the inner space. When the electrode rod is immersed in the slag S, which is generated when the raw material M is dissolved, by the elevating part unit, a resistance heat due to the slag S may be generated, and when the electrode rod is spaced apart from the raw material M or the slag S by the elevating part, arc heat may be generated between the electrode rod and the raw material M or the slag. In general, the electrode rod is immersed in the slag S to generate resistance heat to dissolve the raw material M, and the arc heat may be selectively generated only when necessary.

The power supply unit 300 is connected to the electrode part 200 so as to supply power to the electrode part 200. The power supply unit 300 may be provided in multiple units so as to be individually connected to the plurality of electrode rods or connected oneto-one with the plurality of electrode rods. The power supply unit 300 may supply power to the electrode part 200 through a power supply line.

Hereinafter, the electrode part 200 will be described in more detail with reference to FIG. 2. Here, as described above, the electrode part 200 may include a plurality of electrode rods arranged to be spaced apart from each other, and the plurality of electrode rods may be provided in the same configuration and shape. Accordingly, hereinafter, one electrode rod will be described as an example, and for convenience of description, one electrode rod is described by referring to it as a reference numeral 200 of the electrode part in the drawing.

The electrode part 200 may include a case 210 having an inner space and an electrode 220 formed so that a portion of the electrode 220 is inserted into the case 210 and the rest thereof protrudes to the outside of the case 210 so as to generate heat by receiving power. In addition, the electrode unit 200 may further include a power suppler 230 installed in the case 210 so as to be connected to the power supply line and supply power to the case 210.

A portion of the electrode part 200 is arranged inside the main body part 100, that is, in the processing space, and the other portion thereof is arranged outside the main body part 100, that is, outside the processing space. That is, the electrode part 200 may be installed so that a part thereof passes through the cover 120 in the vertical direction and is positioned inside the furnace body 110. Thus, a portion of the electrode part 200 is positioned below the cover 120 and accommodated in the furnace body 110, and the other portion thereof protrudes above the cover 120 and is positioned outside the furnace body 110. In addition, a height of the electrode part 200 may be adjusted so that the lower part of the electrode part 200 is immersed in the slag S floating on the upper part of the molten material L or buried in the material M piled on the upper part of the slag S.

The case 210 may have a cylindrical shape so as to form an inner space. That is, the case 210 may may have a tube shape with an inner space extending in the vertical direction and open at the top and bottom. The shape of the case 210 is not particularly limited, but may have, for example, a cylindrical shape having a circular cross-section. The case 210 may be made of a metal.

As described above, a portion of the electrode rod 200 is installed so that a portion thereof is positioned inside the furnace body 110 and the rest thereof is arranged outside the furnace body 110. To this end, the case 210 is installed by vertically passing through the cover 120 so that a portion of the case 210 may be positioned inside the furnace body 110 and the rest thereof may be positioned outside the furnace body 110.

The power supplier 230 may transmit power supplied from the power supply unit 300 to the case 210. The power supplier 230 may be installed outside the case 210, that is, on an outer circumferential surface of the case 210. The power supplier 230 may be made of various conductors capable of transmitting power, and for example, may be made of a material containing copper (Cu).

A portion of the electrode 220 is connected to the case 210 so as to protrude to the outside of the lower side of the case 210. That is, the electrode 220 is connected so that a portion of the electrode 220 is positioned inside the case 210 and the rest thereof protrudes outside the case 210. Such an electrode 220 may be made of a material containing carbon (C), and when power is supplied to the electrode 220 through the case 210, resistance heat may be generated. Also, in this case, an arc may be generated around the electrode 220.

Such an electrode 220 is a self-baking electrode manufactured by causing an electrode material introduced into the inner space of the case 210 to be subjected to self-baking. That is, the electrode 220 is not installed in the case 210 in a baked state, and is prepared by introducing an electrode material for forming the electrode 220 into the case 210, and baking the the introduced electrode material by heat.

When the power supplied to the case 210 is transmitted to the electrode 220, heat is generated in the electrode 220, and an arc is generated around the electrode 220. Accordingly, the first and second raw materials M1 to M2 accommodated in the processing space of the main body part 100 are melted to manufacture a molten material L. In this case, the electrode 220 is oxidized by air introduced into the main body part 100 and an oxidizing metal generated in the main body part 100, and at least one of a length and a diameter of the electrode 220 is reduced by the oxidation reaction. That is, the electrode 220 is consumed. In addition, the electrode 220 may also be consumed by the arc generated around the electrode 220. As described above, the electrode 220 is a consumable electrode of which at least one of the length and the diameter is reduced by an oxidation reaction and an arc.

Accordingly, an electrode material for forming the electrode 220 is introduced into the case 210 so that the electrode 220 can be consistently or continuously formed while operating the electric furnace equipment. The introduced electrode material is liquefied and baked inside the case 210 to become a solid electrode 220.

The electrode material is introduced into the internal space of the electrode part 200, i.e., the inside of the case 210, in a solid state, and when power is supplied to the case 210 through the power supply unit 300 and the power supplier 230, power is transmitted to the electrode material introduced into the case 210. In this case, resistance heat is generated in the electrode material, and the electrode material is changed to a liquid state at a temperature of about 85°C to about 100°C. When power is consistently supplied, the electrode material changed to the liquid state is baked at a temperature of about 350 to 400°C, and is manufactured as a solid electrode 220.

As shown in FIG. 2, the electrode material may be introduced into an inner space of the case 210, and a charging section Zₛ, a liquefaction section Zₘ, and a baking section Z_{ba} may be formed from an upper side to a lower side of the inner space into which the electrode material is introduced. Here, the charging section Zₛ refers to a section in which a solid electrode material is accommodated, and the liquefaction section Zₘ may refer to a section in which the solid electrode material changes to a liquid state and the liquid electrode material is accommodated. Meanwhile, the baking section Z_{ba} may refer to a section in which the solid electrode 220 is arranged. That is, when the electrode material is changed from a solid phase to a liquid phase and then is baked, the electrode material is manufactured as the electrode 220, and thus the baking section Z_{ba} may be described as a section in which the electrode 220 is arranged.

In this case, a region of the case 210 in the processing space of the main body part 100 may be oxidized and consumed due to high temperature. That is, at least a portion of the case 210 inserted into the processing space may be consumed and disappear in the baking section Z_{ba}. Accordingly, the case 210 may be descended over time while operating the electric furnace equipment.

Here, the electrode material introduced into the inner space of the electrode part 200 may include a briquette B-type electrode material or a cylinder C-type electrode material. Here, the briquette B-type electrode material may refer to a lump-shaped electrode material having an average diameter of several cm to several tens of cm, and the cylinder C-type electrode material may refer to a cylindrical electrode material having a diameter of several hundreds of cm and a height of tens of cm to several hundreds of cm. As the briquette B-type electrode material and the cylinder C-type electrode material, the electrode materials that differ only in shape but has the same composition may be used. That is, materials containing carbon (C) can be used for both the briquette B-type electrode material and the cylinder C-type electrode material.

In the electric furnace equipment using such an electrode part 200 of self-baking method, the level of the electrode material filled in the electrode rod, that is, the height, is a main factor affecting baking quality of the electrode. Accordingly, the electric furnace equipment according to the embodiment of the present invention includes a detection unit to automatically monitor the height of the electrode material filled in the inner space of the electrode part 200. Here, the detection unit may include a distance measurer 412 for measuring a distance to the electrode material filled in the electrode part 200, and a converter 416 capable of converting the distance measured by the distance measurer 412 into a height of the electrode material. Alternatively, the detection unit may include vibration measurers 422, which are installed in the electrode part 200 so as to measure a vibration amount of the electrode part 200, and a comparator 426 that may calculate the height of the electrode material using the measured vibration amount. In addition, the detection unit may include all of the above-described distance measurer 412, the converter 416, the vibration measurers 422 and 424, and the comparator 426. Meanwhile, at least one of the converter 416 and the comparator 426 may be configured to be included in the detector 430 having a logic for providing height information of the converted or calculated electrode material to the operator or processing height information of the converted or calculated electrode material. Hereinafter, the detection unit according to the embodiment of the present invention will be described in more detail by dividing a case of using the briquette B-type electrode material and a case of using the cylinder C-type electrode material.

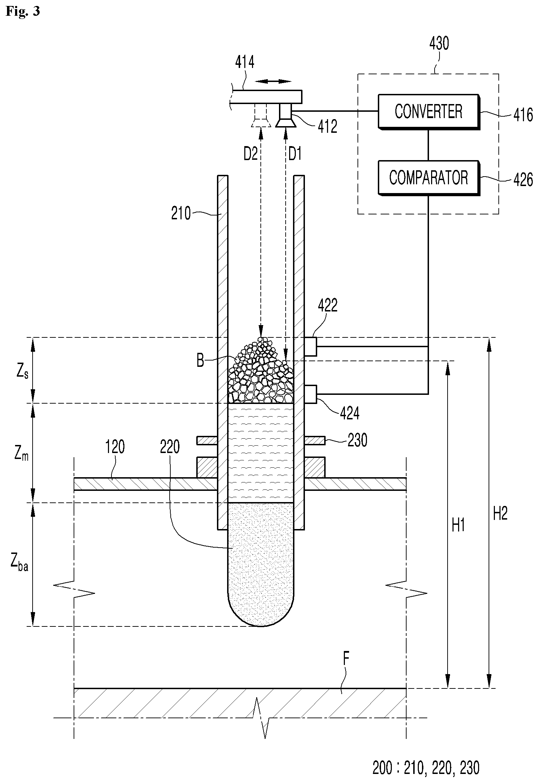

FIG. 3 is a diagram illustrating a state in which a height of an electrode material is detected according to an embodiment of the present invention. An embodiment of the present invention is an embodiment of detecting a height of a briquette B-type electrode material dispersed in an inner space of the electrode part 200 when the electric furnace equipment uses the briquette B-type electrode material.

First, the detection unit may include a distance measurer 412 for measuring a distance to the electrode material filled in the electrode part 200 and a converter 416 capable of converting the distance measured by the distance measurer 412 to the height of the electrode material. In addition, the detection unit may include a driver 414 capable of moving the distance measurer 412 in an extension direction of the electrode part 200, that is, in a direction crossing the vertical direction, for example, in a horizontal direction.

The distance measurer 412 may be arranged above the electrode part 200, that is, above an upper opening of the case 210, and measures a distance to to the electrode material filled in the electrode part 200. Such a distance measurer 412 may include an optical sensor that transmits an optical signal such as a laser, receives an optical signal reflected by the electrode material, and measures the distance between the distance measurer 412 and the electrode material. However, the distance measurer 412 is not limited to such an optical sensor, and various known configurations capable of measuring the distance to the electrode material from above the electrode part 200 may be applied thereto.

Although a plurality of distance measurers 412 may be provided, the distance to the electrode material may be measured by moving a single distance measurer 412 to a plurality of positions. To this end, the distance measurer 412 may be installed in the driver 414 that may move the distance measurer 412 in the horizontal direction, and accordingly, the distance measurer 412 may move in the horizontal direction.

Here, a plurality of electrode parts 200 may be installed in the main body part 100 so as to be spaced apart from each other, and the driver 414 may be configured to move the distance measurer 412 in the arrangement direction of the plurality of electrode parts 200. As described above, the main body part 100 may have a cylindrical shape, and the electrode part 200 may include three electrode rods arranged to be spaced apart from each other in a triangular shape so as to surround the center of the main body part 100. In this case, the driver 414 may be rotated by a rotation shaft passing through the center of the main body part 100 to move the distance measurer 412 in the arrangement direction of the plurality of electrode rods to move the distance measurer 412 to be positioned above each electrode rod. Alternatively, the main body part may have a rectangular cylindrical shape extending in one direction, and the electrode part 200 may include six electrode rods arranged in a line in the one direction. In this case, the driver 414 may move in the extension direction of the main body part 100 to move the distance measurer 412 in the arrangement direction of the plurality of electrode rods to move the distance measurer 412 to be positioned above each electrode rod.

In addition, as shown in FIG. 3, the driver 414 may move the distance measurer 412 in the horizontal direction to measure the height of the electrode material filled in the electrode rod at various positions.

Such a driver 414 may include a crane installed outside the main body part 100 so as to be able to introduce the electrode material into the electrode part 200. In the electric furnace equipment having the electrode unit 200 of a self-baking type, a crane is installed to introduce the electrode material into the electrode unit 200 from above the electrode unit 200, that is, from above the upper opening of the case 210. Therefore, when the distance measurer 412 is installed on the crane in this way so as to allow the the electrode material to be introduced, there is an advantage in that there is no need to add separate equipment for moving the distance measuring device (412).

The converter 416 converts the distance measured by the distance meter 412 into the height of the electrode material. For example, as illustrated in FIG. 3, the distance measurer 412 may be arranged on an edge region of an inner space of the electrode part 200 to measure a distance D1 between the distance measurer 412 and the electrode material. In this case, the converter 416 may subtract the measured distance D1 from a height at which the distance measurer 412 is installed to convert the measured distance D1 into a height H1 of the edge region of the electrode material. Here, the height at which the distance measurer 412 is installed refers to a distance between a reference surface F and the distance measurer 412, which is determined at the time of designing the electric furnace equipment and corresponds to already known information. In this case, the reference surface F may be variously configured such as a ground surface, a bottom surface of the furnace body 110, and an upper surface of the cover 120. In this case, the converter 416 may subtract the measured distance D1 from the height, at which the distance measurer 412 is installed, corresponding to the already known information to convert the height H1 of the electrode material from the reference surface F.

In addition, as described above, the distance measurer 412 may move to measure the height of the electrode material filled in the electrode part 200 at various positions. Accordingly, the distance measurer 412 may be arranged in the center region of the inner space of the electrode part 200 to measure a distance D2 between the distance measurer 412 and the electrode material, and the converter 416 may subtract the measured distance D2 from the height at which the distance measurer 412 is installed to convert the distance D2 into a height H2 of the center region of the electrode material.

In this way, the distance measuring device 412 may move to various positions on the electrode part 200 to measure the height of the electrode material, and the converter 416 may convert the height of the electrode material at each position. The detector 430 may provide information about the height of the electrode material filled in the edge region, the center region, and the like of the inner space of the electrode part 200 to the operator, so that the operator may monitor the height of the electrode material without directly measuring the height of the electrode material.

Meanwhile, alternatively, the detection unit may include vibration measurers 422 and 424 installed in the electrode part 200 so as to measure the vibration amount of the electrode part 200. Such vibration measurers 422 and 424 may include a vibration sensor that measures a movement amount of an object from its original position due to vibration, that is, a displacement value. However, the vibration measurers 422 and 424 are not limited to such a vibration sensor, and various known configurations for detecting the vibration amount of the object may be applied thereof. Meanwhile, the plurality of vibration measurers 422 and 424 may be installed to be spaced apart from each other in the extension direction of the electrode part 200, that is, in the vertical direction, and the detection unit may further include a comparator 426 capable of calculating the height of the electrode material by using the vibration amount measured by each of the vibration measurers 422 and 424.

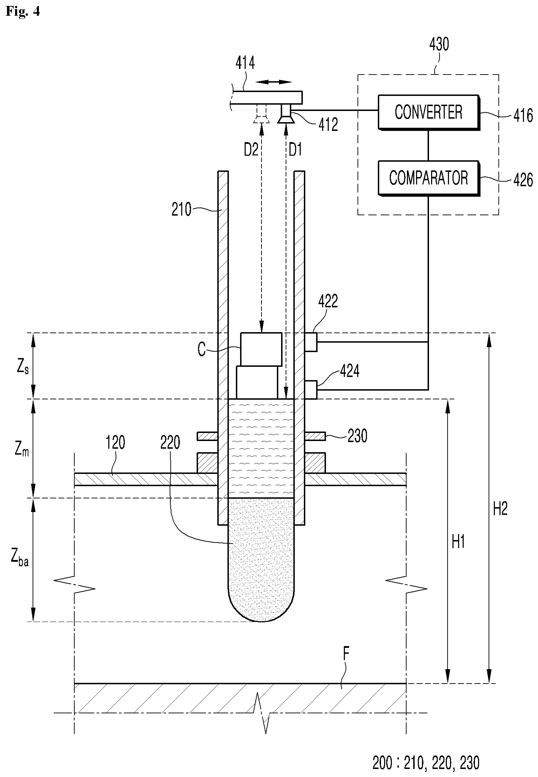

FIG. 4 is a diagram illustrating a change in vibration amount when electrode material is filled and not filled. FIG. 4 shows a result of installing the vibration measurer on the electrode part 200, that is, the side surface of the case 210, and measuring the vibration amount of the electrode part 200 over time while introducing the electrode material.

As shown in FIG. 4, it can be seen that when the internal space of the electrode part 200 is not sufficiently filled with electrode material and is insufficient, the vibration amount of the electrode part 200, i.e. the displacement value, appears high. On the other hand, when time passes and the internal space of the electrode part 200 is completely filled with the electrode material, it can be seen that the vibration amount of the electrode part 200 appears very low, and by using this, the detection unit may detect the height of the electrode material.

A plurality of vibration measurers 422 and 424 may be arranged to be spaced apart from each other in the extension direction of the electrode part 200. Although FIG. 3 illustrates that the first vibration measurer 422 and the second vibration measurer 424 are arranged to be spaced apart from the upper side to the lower side on the side surface of the electrode part 200, the vibration measurers 422 and 424 are not limited thereto, and three or more vibration measurers 422 and 424 may be provided. In addition, the vibration measurers 422 and 424 may be installed on a side surface of the electrode part 200. Here, as described above, since the case 210 may move downward by being consumed and disappearing at least thereof in the baking section Z_{ba} the vibration measurers 422 and 424 may be installed to be spaced from the side surface of the case 210 to prevent the vibration measurers 422 and 424 from moving along with the lowering of the case 210.

In this case, the first vibration measurer 422 and the second vibration measurer 424 may be installed to be spaced apart from each other above the power supplier 230. As described above, the power supplier 230 is a configuration to which power is transmitted from the power supply unit 300, and the internal space of the electrode part 200 at the position where the power supplier 230 is installed corresponds to the liquefaction section Zₘ. The first vibration measurer 422 and the second vibration measurer 424 are for measuring the height of the electrode material accommodated in the charging section Z_{S}, and the first vibration measurer 422 and the second vibration measurer 424 are installed to be spaced apart from each other above the power supplier 230.

When the first vibration measurer 422 and the second vibration measurer 424 are vertically arranged, as illustrated in FIG. 3, if the electrode material is distributed in the inner space of the electrode part 200, a vibration amount exceeding a reference vibration amount may be measured by the first vibration measurer 422, and a vibration amount less than the reference vibration amount may be measured by the second vibration measurer 424. Here, the reference vibration amount may be a value between a vibration amount of the electrode part 200 in a state in which the electrode material is not sufficiently filled in the internal space of the electrode part 200 and is insufficient, and a vibration amount of the electrode part 200 in a state in which the electrode material is completely filled, and for example, may be an intermediate value of the vibration amount in the state in which the electrode material is insufficient and the vibration amount in the state in which the electrode material is completely filled. Accordingly, when the plurality of vibration measurers 422 and 424 are arranged, the comparator 426 may compare the vibration amounts measured by the vibration measurers 422 and 424 to calculate any height between a height of the lowermost vibration measurer, that is, the minimum height at which the vibration amount exceeding the reference vibration amount is measured and a height of the uppermost vibration measurer, that is, the maximum height at which the vibration amount less than the reference vibration amount is measured as the height of the electrode material. In this case, any height may refer to an intermediate value between the maximum height and the minimum height.

In contrast, the vibration measurer may be arranged singly. In this case, a vibration amount measured in advance for each height of the electrode material may be stored as a database in the comparator 426, and the height of the electrode material corresponding to the measured vibration amount of the database may also be calculated as the height of the electrode material.

In this way, the vibration measurers 422 and 424 may be installed on the side surface of the electrode part 200 to measure the vibration amount of the electrode part 200, and the comparator 426 may compare the plurality of measured vibration amounts with each other or compare the measured vibration amount with the measured vibration amount of the database to calculate the height of the electrode material. Even in this case, the detector 430 may provide information about the calculated height of the electrode material to the operator, so that the operator may monitor the height of the electrode material without directly measuring the height of the electrode material.

Meanwhile, the detection unit may include all of the above-described distance measurer 412, the driver 414, the converter 416, the vibration measurers 422 and 424, and the comparator 426, and the converter 416 and the comparator 426 may be configured to be included in the detector 430. In this case, each of the converter 416 and the comparator 426 may sense the height of the electrode material, and the detector 430 may compare the heights of the detected electrode material with each other to determine a more accurate height of the electrode material.

To describe this in more detail, a large amount of fume generated during liquefaction or baking of the electrode material may exist in the inner space of the electrode part 200. As described above, when a large amount of fume exists in the internal space of the electrode part 200, an inaccurate distance to the electrode material may be measured by the distance measuring device 412, and thus the height of the electrode material converted by the converter 416 may have an incorrect value. In contrast, when fume does not exist, the height of the electrode material converted using the distance measured from the distance meter 412 rather than the height of the electrode material calculated from the comparator 426 based on the positions of the vibration detectors 422 and 424 has a more accurate value. Accordingly, the detector 430 compares the height of the electrode material converted from the converter 416 with the height of the electrode material calculated from the comparator 426, and determines the height of the electrode material converted by the converter 416 as the actual height of the electrode material when the difference is within an error range, and determines the height of the electrode material calculated from the comparator 426 as the actual height of the electrode material when the difference is outside the error range. Here, the error range may be set according to an operating condition, and for example, when the plurality of vibration measurers 422 and 424 are installed, the error range may be set as an interval between the vibration measurers 422 and 424.

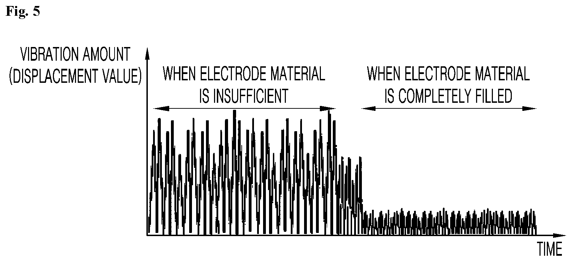

FIG. 5 is a diagram illustrating a state in which a height of an electrode material is detected according to another embodiment of the present invention. The other embodiment of the present invention is an embodiment in which, when the electric furnace equipment uses the electrode material of the cylinder C-type, the height of the electrode material of the cylinder C-type stacked at the center portion of the inner space of the electrode part 200 or the height of the electrode material present in the liquid state at the edge portion of the inner space of the electrode part 200 is detected.

Even when the electrode material of the cylinder C-type is used, the principle of detecting the height of the electrode material by using the distance measurer 412, the driver 414, and the converter 416 or using the vibration measurers 422 and 424 and the comparator 426 may be applied as it is. However, when using the electrode material of the cylinder C-type, the crane for introducing the electrode material uses a jig to introduce the electrode material so as to be stacked in the center portion of the inner space of the electrode part 200. Accordingly, the internal space of the electrode part 200 has a difference in that, unlike the case where the aforementioned briquette B-type electrode material is dispersed, the solid cylinder C-type electrode material is stacked at the center portion of the liquefied section Zₘ where the liquid electrode material is accommodated. Accordingly, descriptions overlapping with those described with reference to FIGS. 3 and 4 will be omitted, and differences will be mainly described.

The converter 416 converts the distance measured by the distance meter 412 into the height of the electrode material. In this case, when the distance measurer 412 is arranged on the edge region of the inner space of the electrode part 200, the distance measurer 412 may measure the distance D1 to the electrode material in the liquid state, and the converter 416 may convert the height H1 of the electrode material in the liquid state through this. Here, the distance measurer 412 may move in the horizontal direction, and when the distance measurer 412 is arranged on the center region of the inner space of the electrode part 200, the distance measurer 412 may measure the distance D2 to the stacked cylinder C-type electrode material and the converter 416 may convert the stacked height H2 of the cylinder C-type electrode material through this. Using this, as described above, the detector 430 provides information about the height of the electrode material filled in the edge region, center region, etc. of the internal space of the electrode part 200 to the operator, so that the operator may monitor the height of the electrode material without directly measuring the height of the electrode material.

.The comparator 426 converts the measured vibration amount by the vibration meters 422, 426 into the height of the electrode material. Here, the electrode material in a liquid state may be filled in the inner space of the electrode part 200, and since the electrode material of the cylinder C-type is arranged only at the center portion of the inner space, the comparator 426 mayn calculate the height of the electrode material in the liquid state through this. In this case, as described above, the detector 430 provides information about the calculated height of the electrode material in the liquid state to the operator, so that the operator may monitor the height of the electrode material without directly measuring the height of the electrode material.

Hereinafter, an electric furnace operation method according to an embodiment of the present invention will be described. The electric furnace operation method according to an embodiment of the present invention may be a method of dissolving a raw material by using the above-described electric furnace, and thus the contents described above with respect to electric furnace equipment may be applied as it is, and thus a description thereof will be omitted.

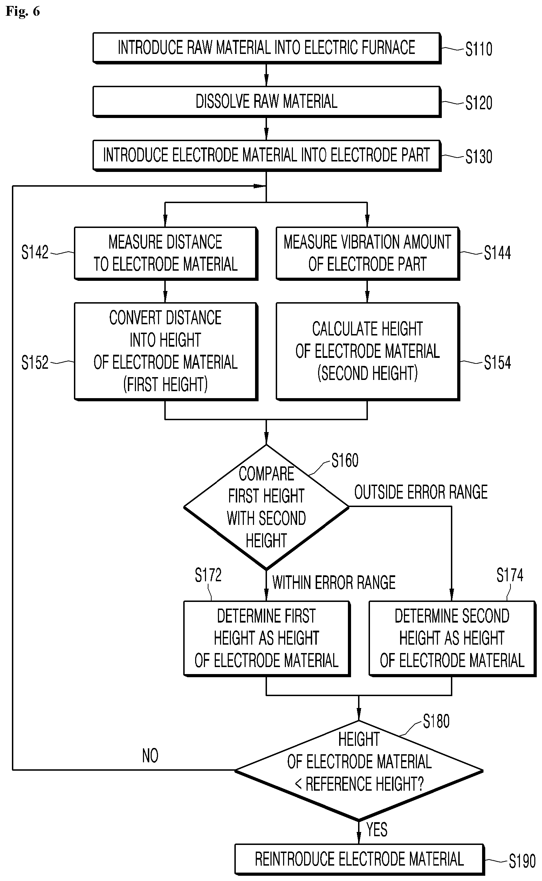

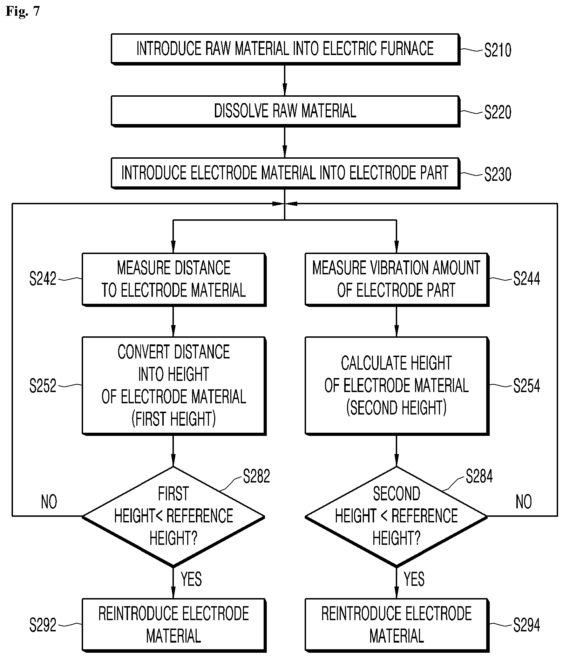

FIG. 6 is a diagram schematically illustrating an electric furnace operation method according to an embodiment of the present invention, and FIG. 7 is a diagram schematically illustrating an electric furnace operation method according to another embodiment of the present invention. Here, FIG. 6 illustrates an electric furnace operation method using a briquette B-type electrode material, and FIG. 7 illustrates an electric furnace operation method using a cylinder C-type electrode material.

Referring to FIG. 6, the electric furnace operation method using the briquette B-type electrode material according to an embodiment of the present invention includes a process of introducing a raw material M into an electric furnace (S110), a process of supplying power to the electrode part 200 of the electric furnace to dissolve the raw material M (S120), a process of introducing an electrode material for self-baking into the electrode part 200 (S130), and a process of detecting a height of the electrode material filled in the electrode part 200.

In the process of introducing the raw material M(S110), the raw material M is introduced into a processing space of the main body part 100 by using the raw material supply unit 500. Here, as described above, the raw material M introduced into the processing space of the main body part 100 from the raw material supply unit 500 may include direct reduced iron reduced by hydrogen, and the direct reduced iron and the coke may be introduced by using the first and second hoppers 510 and 520.

In the process of dissolving the raw material M (S120), power is supplied to the electrode part 200 to dissolve the raw material M. The electrode part 200 receives power to generate a resistance heat or an arc heat, and supplies heat to the raw material M charged into the processing space to melt or dissolve the raw material M, and produces a molten material L.

In the process of introducing the electrode material (S130), the electrode material for forming the electrode 220 is introduced into the case 210 so that the electrode 220 may be consistently or continuously formed while operating the electric furnace. The introduced electrode material is liquefied and baked inside the case 210 to become a solid electrode 220.

In the process of detecting the height of the electrode material, the height of the electrode material filled in the electrode part 200 may be detected by using the distance measurer 412 for measuring the distance to the electrode material filled in the electrode part 200, the driver 414 capable of moving the distance measurer 412 in the extension direction of the electrode part 200, that is, the direction crossing the vertical direction, for example, the horizontal direction, and the converter 416 capable of converting the distance measured by the distance measurer 412 into the height of the electrode material.

In this case, the process of detecting the height of the electrode material may include a process of measuring a distance to the electrode material filled in the electrode part 200 at a reference position above the electrode part 200 having the set height (S142), and subtracting the measured distance from a height of the reference position to convert the distance into the height of the electrode material (S152).

In the process of measuring the distance to the electrode material (S142), the distance to the electrode material filled in the electrode part 200 is measured at the reference position on the electrode part 200 having a set height. Here, the reference position refers to a position at which the distance measurer 412 is installed, and the set height refers to a distance from the reference surface F to the distance measurer 412. The distance measurer 412 installed at the set height may measure a distance to the electrode material filled in the electrode part 200 at the reference position. In this case, in the process of measuring the distance to the electrode material, the distance to the electrode material may be measured at a plurality of positions that cross the extension direction of the electrode part 200, for example, a plurality of positions arranged in the horizontal direction, and this may be performed by measuring the distance to the electrode material while moving the distance measurer 412 to pass through the plurality of positions by the driver 414.

In the process of converting the distance into the height of the electrode material (S152), the distance is converted into the height of the electrode material by subtracting the measured distance from the height of the reference position. That is, the converter 416 may convert the distance into the height of the electrode material, that is, a first height, by subtracting the distance measured by the distance measurer 412 from the height at which the distance measurer 412 is installed.

In contrast, in the process of detecting the height of the electrode material, the height of the electrode material filled in the electrode part 200 may be detected by using the vibration measurers 422 and 424 installed in the electrode part 200 so as to measure the vibration amount of the electrode part 200 and the comparator 426 capable of calculating the height of the electrode material by using the vibration amount measured by each of the vibration measurers 422 and 424.

In this case, the process of detecting the height of the electrode material may include a process of measuring the vibration amount of the electrode part 200 at different heights (S144) and a process of calculating a height between the minimum height at which the vibration amount exceeding the reference vibration amount is measured and the maximum height at which the vibration amount less than the reference vibration amount is measured as the height of the electrode material (S154).

The process of measuring the vibration amount of the electrode part 200 at different heights (S144) is performed by the plurality of vibration measurers 422 and 424 installed to be spaced apart from each other in the extension direction of the electrode part 200, that is, in the vertical direction. In this case, as described above, the vibration measurers 422 and 424 may be installed to be spaced apart above the power supplier 230, and the vibration meters 422 and 424 may be installed to be spaced apart from the side surface of the case 210 to prevent the vibration meters 422 and 424 from moving as the case 210 descends.

In the process of calculating the height as the height of the electrode material (S154), the height between the minimum height at which the vibration amount exceeding the reference vibration amount is measured and the maximum height at which the vibration amount less than the reference vibration amount is measured is calculated as the height of the electrode material. When the plurality of vibration measurers 422 and 424 are arranged, the comparator 426 may compare the vibration amounts measured by the vibration measurers 422 and 424 to calculate any height between a height of the lowermost vibration measurer, that is, the minimum height at which the vibration amount exceeding the reference vibration amount is measured and a height of the uppermost vibration measurer, that is, the maximum height at which the vibration amount less than the reference vibration amount is measured as the height of the electrode material. In this case, any height may refer to an intermediate value between the maximum height and the minimum height.

Alternatively, the vibration measurer may be arranged singly, and in this case, in the process of detecting the height of the electrode material, the height of the electrode material may be detected by using a database in which the vibration amount measured in advance for each height of the electrode material is stored.

In contrast, in the process of detecting the height of the electrode material, the height of the electrode material may be detected by using all of the distance measurer 412, the driver 414, the converter 416, the vibration measurer 422 and 424, and the comparator 426. That is, since there may be a large amount of fume generated during liquefaction or baking of the electrode material in the inner space of the electrode part 200, the detector 430 may compare the height of the electrode material converted by the converter 416 with the height of the electrode material calculated by the comparator 426 (S160), and when the difference between the first height and the second height is within an error range, the detector 430 determine the first height converted by the converter 416 as the actual height of the electrode material, and when the difference is outside the error range, the detector 430 may determine the second height calculated from the comparator 426 as the actual height of the electrode material (S174). Here, the error range may be set according to an operating condition, and for example, when the plurality of vibration measurers 422 and 424 are installed, the error range may be set as an interval between the vibration measurers 422 and 424 as described above. Information about the height of the detected electrode material detected in this way is provided to the operator, whereby the operator may monitor the height of the electrode material without directly measuring the height of the electrode material.

In addition, the electric furnace operation method according to an embodiment of the present invention may further include a process of reintroducing the electrode material according to the detected height of the electrode material (S190). This may be performed by comparing the height of the electrode material with the reference height (S180). In this case, the reference height is the height of the electrode material when the electrode material is distributed in an appropriate state in the internal space of the electrode part 200, and may be set according to the operating condition. When the briquette type electrode material is introduced, as described above, when the difference between the first height and the second height is within the error range, the first height converted by the converter 416 is determined as the actual height of the electrode material (S172), and when the difference is outside outside the error range, the second height calculated by the comparator 426 may be determined as the actual height of the electrode material (S174), and thus when the determined height is less than the reference height, it is considered that the electrode material is insufficient in the internal space of the electrode unit 200, and the electrode material may be reintroduced. In contrast, when the determined height is greater than or equal to the reference height, the process of detecting the height of the electrode material may be continuously performed.

Referring to FIG. 7, an electric furnace operation method according to another embodiment of the present invention using a a cylinder C-type electrode material also includes a process of introducing a raw material M into an electric furnace (S210,) a process of supplying power to the electrode part 200 of the electric furnace to dissolve the raw material M (S220), a process of introducing an electrode material for self-baking into the electrode part 200 (S230,) and a process of detecting a height of the electrode material filled in the electrode part 200. In addition, the process of detecting the height of the electrode material may include a process of measuring a distance to the electrode material filled in the electrode part 200 at a reference position on the electrode part 200 having a set height (S242), and a process of subtracting the measured distance from the height of the reference position to convert the distance into a height of the electrode material (S252), and alternatively, may include a process of measuring a vibration amount of the electrode part 200 at different heights (S244) and a process of calculating a height between the minimum height at which the vibration amount exceeding the reference vibration amount is measured and the maximum height at which the vibration amount less than the reference vibration amount is measured as a height of the electrode material (S254). This is the same as the case in which the above-described briquette B-type electrode material is introduced, and thus a repeated description thereof will be omitted.

In addition, the electric furnace operation method according to an embodiment of the present invention may further include a process of reintroducing the electrode material according to the detected height of the electrode material. That is, when the height of the electrode material converted by the converter 416, that is, the first height is compared with the reference height (S282), and when the first height is less than the reference height, it is considered that the electrode material is insufficient in the internal space of the electrode part 200, and the process of reintroducing the electrode material (S292) may be performed. In addition, the height of the electrode material calculated by the comparator 426, that is, the second height is compared with the reference height (S180), and when the second height is less than the reference height, it is considered that the electrode material is insufficient in the inner space of the electrode part 200, and the electrode material may be reintroduced.

Here, when the electrode material of the cylinder C-type is used as described above, unlike the case in which the electrode material of the above-described briquette type B-type is dispersed, in the internal space of the electrode part 200, the material electrode of the solid cylinder C-type is stacked in the center portion of the liquefaction section Zₘ in which the liquid electrode material is accommodated. Accordingly, whether the electrode material is reintroduced may be determined by reflecting not only the second height corresponding to the height of the liquid electrode material but also the height of the electrode material stacked at the center portion of the electrode part 200. Therefore, when the cylinder C-type electrode material is introduced, in the process of reintroducing the electrode material, when the difference between the height of the electrode material stacked at the center portion of the electrode part 200 and the height of the electrode material present in the liquid state at the edge of the electrode part 200 is measured to be less than the reference height difference, the electrode material may be reintroduced. In this case, the height of the electrode material stacked at the center portion of the electrode part 200 may be detected by positioning the distance measurer 412 at the center portion of the inner space of the electrode part 200, and the height of the electrode material present in the liquid state at the edge of the electrode part 200 may be detected by positioning the distance measurer 412 at the edge of the inner space of the electrode part 200 or may be detected using the second height calculated by the comparator 426. In this case, a reference height difference may be set as a difference between the height when the cylinder C-type electrode material is stacked in an appropriate state in the inner space of the electrode part 200 and the height of the liquid electrode material.

As described above, according to the embodiment of the present invention, the height of the electrode material filled in the electrode part can be automatically detected without intervention of the operator, thereby preventing safety accidents and improving productivity by increasing the operation rate of the facility.

In addition, the amount of the electrode material filled may be accurately checked to prevent detachment and internal defects of the electrode, and baking quality of the electrode may be increased to improve the operation efficiency.

Although the preferred embodiments of the present invention have been described using specific terms and illustrated, it is obvious that various changes and modifications may be made to the embodiments and terms described herein without departing from the technical spirit and scope of the following claims. Such modified embodiments should not be individually understood from the spirit and scope of the present invention, and should be understood to fall within the scope of the present invention.

## Claims

1. An electric furnace equipment comprising:
a main body part having a processing space for processing a raw material;
an electrode part installed in the main body part and having an internal space into which an electrode material for self-baking is introduced; and
a detection unit for detecting a height of the electrode material filled in the electrode part.

2. The electric furnace equipment of claim 1, wherein
the detection unit comprises a distance measurer measuring a distance from the electrode material filled in the electrode part and a converter converting the measured distance into a height of the electrode material.

3. The electric furnace equipment of claim 2, wherein
the detection unit comprises a driver moving the distance measurer in a direction crossing an extension direction of the electrode part.

4. The electric furnace equipment of claim 3, wherein
the electrode part is installed in the main body part so that a plurality of electrode parts are arranged to be spaced apart from each other, and
the driver moves the distance measurer along an arrangement direction of the plurality of electrode parts.

5. The electric furnace equipment of claim 3, wherein
the driver comprises a crane installed outside the main body so as to introduce the electrode material into the electrode part.

6. The electric furnace equipment of claim 1 or 2, wherein
the detection unit comprises a vibration measurer installed in the electrode part so as to measure a vibration amount of the electrode part.

7. The electric furnace equipment of claim 6, wherein
a power supplier heating the electrode material by supplying power to the electrode part is installed on a side surface of the electrode part, and
the vibration measurer is installed to be spaced apart above the power supply unit.

8. The electric furnace equipment of claim 6, wherein
the plurality of vibration measurers are arranged to be spaced apart from each other in the extension direction of the electrode part, and
the detection unit comprises a comparator calculating a height of the electrode material by comparing a vibration amount measured by the plurality of vibration measurers.

9. An electric furnace operation method comprising:
a process of introducing a raw material into an electric furnace;
a process of dissolving the raw material by supplying power to an electrode part of the electric furnace;
a process of introducing an electrode material for self-baking into the electrode part; and
a process of detecting a height of the electrode material filled in the electrode part.

10. The electric furnace operation method of claim 9, wherein
the process of detecting the height of the electrode material comprises
a process of measuring a distance to the electrode material filled in the electrode part at a reference position above the electrode part having a set height, and
a process of subtracting the measured distance from a height of the reference position to convert the distance into the height of the electrode material.

11. The electric furnace operation method of claim 10, wherein
in the process of measuring the distance to the electrode material, a distance from the electrode material is measured at a plurality of positions arranged in a direction crossing an extension direction of the electrode part.

12. The electric furnace operation method of claim 11, wherein
the process of measuring the distance to the electrode material is performed while moving a distance measurer so as to pass through the plurality of positions.

13. The electric furnace operation method of claim 9, wherein
the process of detecting the height of the electrode material comprises
a process of measuring a vibration amount of the electrode part at different heights, and
a process of calculating a height between a minimum height at which a vibration amount exceeding a reference vibration amount is measured and a maximum height at which a vibration amount less than the reference vibration amount is measured as the height of the electrode material.

14. The electric furnace operation method of claim 9, wherein
in the process of detecting the height of the electrode material, the height of the electrode material is detected by using a database in which a vibration amount measured in advance for each height of the electrode material is stored.

15. The electric furnace operation method of claim 9, further comprising
a process of reintroducing the electrode material according to the detected height of the electrode material.

16. The electric furnace operation method of claim 15, wherein
in the process of introducing the electrode material, a briquette type electrode material is introduced into the electrode part, and
in the process of reintroducing the electrode material, the electrode material is reintroduced when the detected height of the electrode material is measured to be less than a reference height.

17. The electric furnace operation method of claim 16, wherein
the process of detecting the height of the electrode material comprises a process of determining the height of the electrode material by comparing a first height of the electrode material converted from a distance to the electrode material and a second height of the electrode material calculated from the vibration amount of the electrode part.

18. The electric furnace operation method of claim 17, wherein
in the process of determining the height of the electrode material, the first height is determined as the height of the electrode material when a difference between the first height and the second height is within an error range, and the second height is determined as the height of the electrode material when the difference between the first height and the second height is outside the error range.

19. The electric furnace operation method of claim 15, wherein
in the process of introducing the electrode material, a cylinder-type electrode material is introduced into a center portion of the electrode part, and
in the process of reintroducing the electrode material, when a difference between the height of the electrode material stacked at a center portion of the electrode part and the height of the electrode material present in a liquid state at an edge of the electrode part is measured to be less than a reference height difference.

20. The electric furnace operation method of any one of claims 9 to 19, wherein
the raw material comprises direct reduced iron reduced by hydrogen.
